# FASCICULE DE BREVET EUROPEEN

(11) **EP 2 942 657 B1**
(45) Date de publication et mention de la délivrance du brevet: **24.11.2021**
(21) Numéro de dépôt: 15166318.4
(22) Date de dépôt: 05.05.2015
(51) Int. Cl.: F21V 8/00

(54) **VISUEL DE TETE COMPORTANT UN MELANGEUR OPTIQUE A EXPANSION DE PUPILLE PILOTABLE**
KOPF-SICHTGERÄT, DAS EINE OPTISCHE MISCHVORRICHTUNG MIT STEUERBARER PUPILLENWEITUNG UMFASST
HEAD DISPLAY DEVICE COMPRISING AN OPTICAL MIXER WITH CONTROLLABLE PUPIL EXPANSION

(30) Priorité: 09.05.2014 FR 1401047
(43) Date de publication de la demande: 11.11.2015
(73) Titulaire: THALES, 92400 Courbevoie (FR)
(72) Inventeur: Lux, Johanna, 33187 LE HAILLAN Cedex (FR); Ellero, Sébastien, 47170 ANDIRAN (FR); Augereau, Philippe, 33187 LE HAILLAN Cedex (FR)
(74) Mandataire: Marks & Clerk France

(56) Documents cités:
- WO-A1-2013/164665
- WO-A1-2014/126692
- US-A1- 2010 149 073
- US-A1- 2013 250 431
- US-A1- 2013 250 431

## Description

Le domaine de l'invention est celui des systèmes de visualisations de tête comportant un guide optique utilisé pour le transport d'une image collimatée issue d'un micro-afficheur. Ces guides optiques ou mélangeurs optiques permettent de superposer sur le paysage extérieur cette image collimatée. Les applications concernent aussi bien le domaine grand public que le domaine aéronautique.

Un système de visualisation comportant un tel guide comprend un imageur de petites dimensions, une optique de collimation et le guide optique. La fonction du guide optique est d'amener l'image collimatée à l'œil de l'utilisateur en créant le minimum de perturbations visuelles et en étant le plus discret et le moins encombrant possible. Dans sa version de base, il comporte une lame de faible épaisseur dans laquelle est insérée une lame semi-réfléchissante. Cette lame a une puissance optique faible ou nulle et n'apporte qu'une perturbation très faible sur la vision de l'extérieur. Généralement, cette lame est une lame à faces planes et parallèles mais d'autres formes sont envisageables. Ainsi, la demande PCT WO 2006/064301 intitulée « System and method for beam expansion with near focus in a display device » décrit un guide optique courbe utilisé pour la propagation et la transmission d'images.

Les faisceaux lumineux issus de l'afficheur se propagent par réflexion totale à l'intérieur du guide optique, se réfléchissent sur la lame semi-réfléchissante et sortent du guide optique vers l'œil de l'utilisateur.

Si le guide optique ne comporte qu'une seule lame semi-réfléchissante, l'observateur ne peut voir qu'une portion étroite de l'image, la pupille du système se situant loin de l'œil et étant par nature de petites dimensions. Pour pallier cet inconvénient dans une dimension donnée, on multiplie les lames semi-réfléchissantes à l'intérieur du guide optique. Ces lames semi-réfléchissantes sont toutes parfaitement parallèles entre elles.

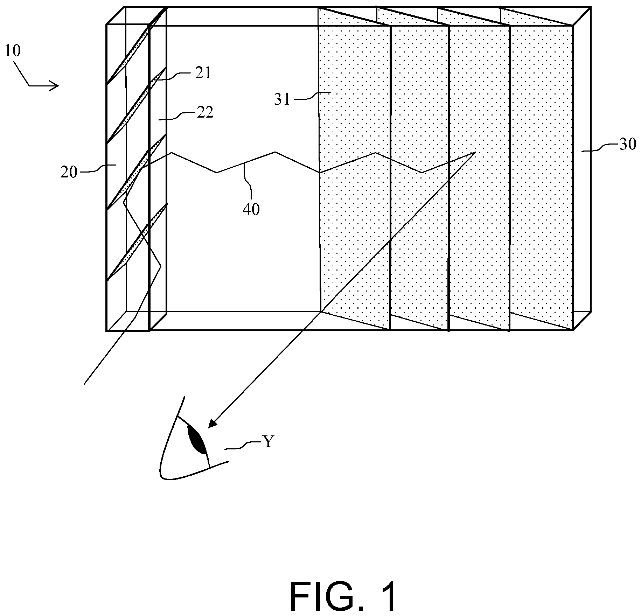

Pour certaines applications nécessitant notamment de grands champs visuels, il est nécessaire d'agrandir encore la zone pupillaire dans les deux dimensions de l'espace. Dans ce cas, comme illustré en figure 1 qui représente une vue en perspective d'un guide donnant une telle pupille, le guide optique 10 est composé de deux éléments optiques primaires 20 et 30. Le premier élément 20 est un premier guide optique à faces planes et parallèles comportant plusieurs premières lames semi-réfléchissantes 21 parallèles entre elles et permettant d'agrandir la pupille dans une première direction donnée. Le second élément 30 est un second guide optique à faces planes et parallèles comportant plusieurs secondes lames semi-réfléchissantes 31 parallèles entre elles et permettant d'agrandir la pupille dans une seconde direction perpendiculaire à la première direction. Les deux guides sont réunis par une face commune 22 et forment une seule lame à face planes et parallèles.

Le trajet des rayons lumineux issus de l'imageur jusqu'à l'œil Y de l'observateur dans un tel guide 10 est représenté par la flèche en zig-zag 40, la lumière étant réfléchie sur les parois du premier guide 20 et du second guide 30 et sur les lames semi-réfléchissantes 21 et 31.

Dans un tel guide, les coefficients de réflexion des lames semi-réfléchissantes 21 et 31 sont obligatoirement faibles de façon que les rayons lumineux puissent traverser plusieurs lames semi-réfléchissantes sans atténuation excessive. Par conséquent, l'image collimatée à la sortie du guide optique est nécessairement très atténuée. Dans un certain nombre d'applications et en particulier pour le domaine aéronautique, le système optique peut fonctionner dans un environnement lumineux important et dans ce cas, le contraste de l'image est faible, ne permettant pas une bonne perception de l'image. On peut augmenter la luminance de l'imageur mais d'autres contraintes apparaissent telles que l'encombrement de l'éclairage, sa consommation électrique, les problèmes de dissipation thermique, ...

Le système de visualisation de tête selon l'invention ne présente pas ces inconvénients. Il est basé sur le constat que la plus grande partie de l'énergie lumineuse transmise par le guide optique est perdue. Le principe de l'invention est d'adapter le coefficient des lames semi-réfléchissantes qui composent le guide optique de façon que la lumière ne soit transmise qu'aux endroits où se trouve effectivement l'œil de l'observateur. On peut ainsi augmenter de façon significative les rendements lumineux du guide optique.

La publication US2013/0250431 divulgue un système de visualisation de tête comprenant un guide optique comportant une pluralité de lames semi réfléchissantes. Ce document divulgue une première pluralité de lames semi-réfléchissantes internes, inclinées par rapport à un premier plan afin d'élargir la pupille dans une première direction et une seconde pluralité de lames semi-réfléchissantes internes afin d'élargir la pupille dans une seconde direction perpendiculaire à la première direction. La publication US2010/149073 divulgue un système de visualisation de tête comprenant un oculomètre ainsi qu'un système permettant de déplacer la pupille de sortie en fonction de la position de la tête de l'observateur. En outre, ce document divulgue des facettes dont la réflectivité peut être programmée.

Plus précisément, l'invention a pour objet un système de visualisation de tête comprenant les caractéristiques récitées dans la revendication 1. Des modes de réalisation additionnels sont définis dans les revendications dépendantes.

L'invention sera mieux comprise et d'autres avantages apparaîtront à la lecture de la description qui va suivre donnée à titre non limitatif et grâce aux figures annexées parmi lesquelles :
La figure 1 représente un guide optique à lames semi-réfléchissantes selon l'art antérieur ;
La figure 2 représente le guide optique d'un système de visualisation selon l'invention ;
La figure 3 représente le fonctionnement d'un guide optique d'un système de visualisation selon l'invention.

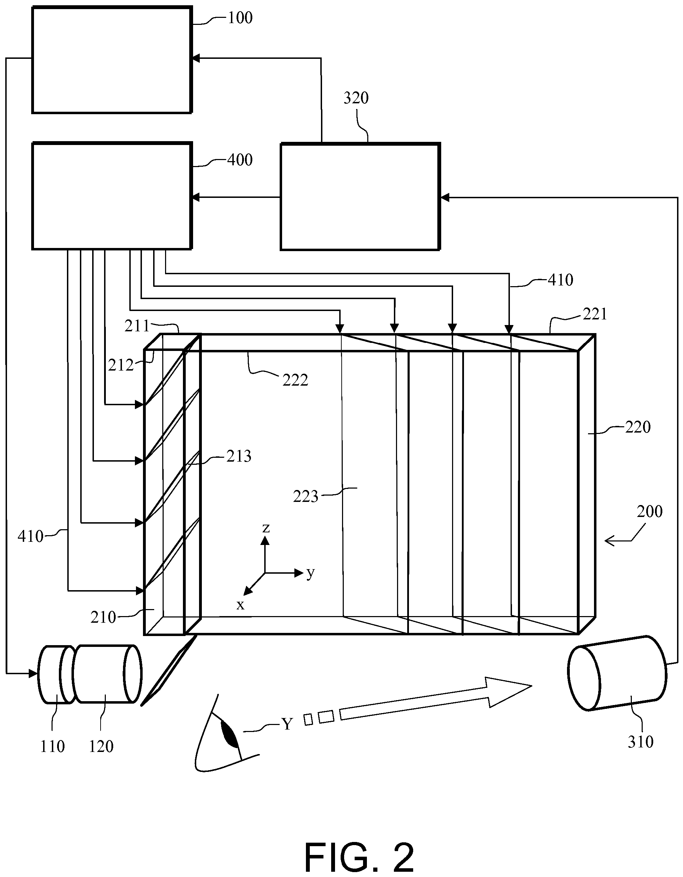

A titre d'exemple non limitatif, le synoptique d'un système de visualisation de tête selon l'invention est représenté sur la figure 2. Il comporte essentiellement :
- Un générateur d'images graphiques 100 connecté au système avionique dans le cas d'applications aéronautiques ;
- un micro-afficheur 110 à haute résolution connecté au générateur graphique. Typiquement, les dimensions de l'image ne dépassent pas quelques millimètres ;
- une optique de collimation 120 qui forme de l'image de l'afficheur une image à l'infini ;
- un guide optique 200 selon l'invention comportant une pluralité de lames semi-réfléchissantes à réflectivité programmable. Le guide d'onde envoie l'image collimatée vers l'œil Y de l'observateur ;
- un système oculométrique comportant une caméra 310 agencée de façon à capter la pupille de l'œil Y de l'observateur et des moyens d'analyse 320 des images de cette pupille ;
- des moyens électroniques 400 de commande de la réflectivité des différentes lames semi-réfléchissantes en fonction des informations issues du système oculométrique.

Le guide optique 200 selon l'invention peut prendre différentes formes. Dans le cas de la figure 2, il comporte deux conducteurs d'images 210 et 220. Le premier guide 210 élargit la pupille dans une première direction, le second guide 220 élargit la pupille dans la direction perpendiculaire. Les deux guides ont une face commune. Chaque guide a la forme extérieure d'une lame à faces planes et parallèles. Ces différentes faces sont référencées 211, 212, 221 et 222 sur la figure 2. Ainsi, le guide optique n'introduit pas de distorsion du paysage quand on regarde à travers. Typiquement, le guide optique a une épaisseur de quelques millimètres et une surface de quelques centimètres carrés.

Chaque guide comporte plusieurs lames 213 et 223 semi-réfléchissantes internes, planes, parallèles entre elles, inclinées par rapport à un plan et équidistantes. Dans le cas de la figure 2, le plan du premier guide est le plan (0, y, z) et le plan du second guide est le plan (O, x, y).

Le coefficient de réflexion de chaque lame est pilotable comme indiqué par les flèches 410 issues des moyens électroniques 400. Il existe différentes techniques permettant d'obtenir cet effet. Par exemple, pour un film à réflectivité variable, le coefficient de réflexion du film varie pratiquement entre 0% et 100% en fonction d'une tension appliquée. Le matériau utilisé est un cristal liquide.

Les oculomètres fonctionnent selon le principe suivant. On éclaire la pupille d'œil d'un observateur au moyen d'une ou de plusieurs sources de lumière, émettant généralement dans le proche infrarouge. Une caméra forme une image de cette pupille sur un capteur. L'image issue du capteur est analysée par des moyens d'analyse d'image de façon à détecter la position et l'orientation de la pupille. On détermine ainsi la direction du regard.

Il existe différents agencements possibles de l'oculomètre. La demande US 2013/0207887 intitulée « Heads-Up Displays including Eye Tracking » est un exemple d'intégration des parties optiques d'un oculomètre à un système de visualisation de tête.

Connaissant la position et l'orientation de la pupille d'œil de l'observateur, on détermine alors les lames semi-réfléchissantes utiles qui envoient l'image collimatée dans cette position et dans cette orientation. Les moyens électroniques de commande 400 ajustent la réflectivité des différentes lames semi-réfléchissantes du guide optique de façon que les lames utiles au transport de l'image vers l'œil soient semi-réfléchissantes, les autres lames étant transparentes. On diminue ainsi les pertes dues aux réflexions sur les différentes lames qui n'ont aucune contribution à la vision de l'image.

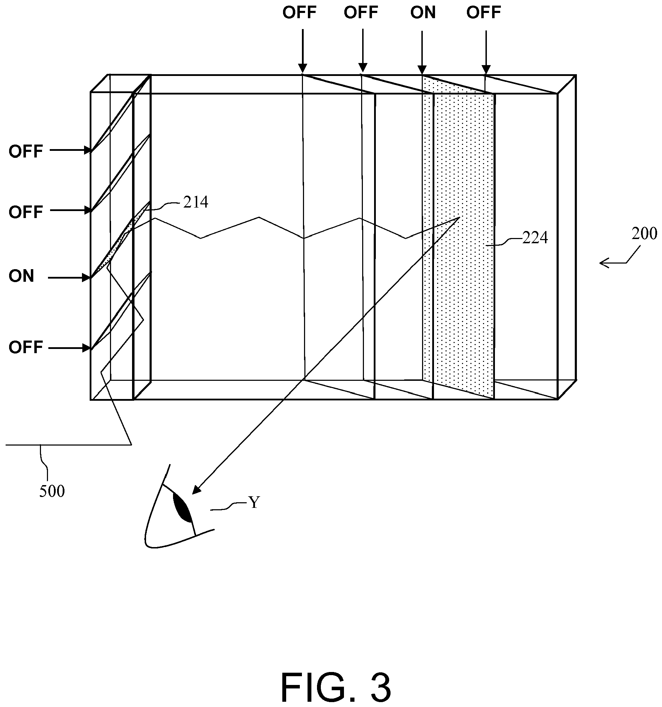

Le fonctionnement du système est illustré en figure 3. Cette figure représente uniquement le guide optique 200 de la figure précédente. Le cheminement des rayons lumineux issus de l'afficheur est symbolisé par une flèche brisée 500. En ne rendant réfléchissantes que les lames semi-réfléchissantes utiles qui sont représentées en pointillés sur la figure 3, on voit que le rayon lumineux n'est réfléchi que par deux lames semi-réfléchissantes 214 et 224, les autres lames semi-réfléchissantes étant transparentes. Sur la figure 3, la commande des lames transparentes assurée par les moyens électroniques 400 est symbolisé par « OFF » et celle des lames semi-réfléchissantes par « ON ».

Le contrôle du coefficient de réflexion des lames semi-réfléchissantes peut avoir d'autres applications que l'optimisation de la luminance de l'image issue de l'afficheur. Ainsi, lorsque l'afficheur n'est pas fonctionnel et lorsque la luminance extérieure est faible, les coefficients de réflexion des lames peuvent être tous voisins de zéro de façon à optimiser la transmission du paysage extérieur. De la même façon, lorsque l'afficheur n'est pas fonctionnel et lorsque la luminance extérieure est forte, les coefficients de réflexion des lames peuvent être élevés de façon à atténuer la transmission du paysage extérieur. De façon générale, il est possible d'optimiser le contraste de l'image collimatée sur l'extérieur en jouant sur les coefficients de réflexion des différentes lames semi-réfléchissantes.

Il est également possible, de réduire la luminance de l'afficheur tout en conservant un bon niveau de contraste des images projetées. On réduit ainsi l'encombrement de l'éclairage, sa consommation électrique, la dissipation thermique, ...

L'oculomètre donne la position du regard. Il est alors possible d'adapter l'image projetée en fonction de cette position. Par exemple, pour les applications aéronautiques, l'image est différente selon que le pilote regarde à l'extérieur ou au contraire regarde les instruments de sa planche de bord.

## Revendications

1. Système de visualisation de tête comprenant au moins un afficheur (110) et un guide optique (200) comportant un premier conducteur d'images (210) comportant une pluralité de premières lames semi-réfléchissantes (213) internes, inclinées par rapport à un premier plan, **caractérisé en ce que** :
- le système de visualisation de tête comporte un oculomètre (310, 320) apte à détecter la position de la pupille d'œil (Y) d'un observateur ;
- au moins une desdites premières lames réfléchissantes (213) comportant un traitement à réflectivité programmable, la dite réflectivité dépendant de la position et/ou de l'orientation de la pupille d'œil détectée par l'oculomètre (310, 320), de façon à réfléchir l'image de l'afficheur (110) vers ladite pupille et seulement vers elle ;
- le guide optique (200) comporte un second conducteur d'images (220) comportant une pluralité de secondes lames semi-réfléchissantes (223) internes, inclinées par rapport à un second plan perpendiculaire au premier plan, le premier conducteur d'images (210) élargit la pupille dans une première direction, le second conducteur d'images (220) élargit la pupille dans la direction perpendiculaire, au moins une desdites secondes lames comportant un traitement à réflectivité programmable, la dite réflectivité dépendant de la position et/ou de l'orientation de la pupille d'œil détectée par l'oculomètre, de façon à réfléchir l'image de l'afficheur vers ladite pupille et seulement vers elle.

2. Système de visualisation de tête selon la revendication 1, **caractérisé en ce que**, les premières lames semi-réfléchissantes (213) sont planes et parallèles entre elles et/ou les secondes lames semi-réfléchissantes (223) sont planes et parallèles entre elles.

3. Système de visualisation de tête selon la revendication 2, **caractérisé en ce que** chaque guide optique (200) a la forme extérieure d'une lame à faces (211, 212, 221, 222) planes et parallèles.

4. Système de visualisation de tête selon l'une des revendications précédentes, **caractérisé en ce que**, en l'absence d'images transmises par l'imageur, la réflectivité des lames comportant un traitement à réflectivité programmable dépend de la luminance du paysage extérieur.

5. Système de visualisation de tête selon l'une des revendications précédentes, **caractérisé en ce que** l'image fournie par l'afficheur dépend des informations de position et/ou d'orientation de la pupille fournie par l'oculomètre.

## Patentansprüche

1. Head-up-Dislay-System, umfassend mindestens ein Display (110) und einen optischen Leiter (200), umfassend einen ersten Bildleiter (210), welcher eine Vielzahl erster innerer halbreflektierender Plättchen (213) umfasst, welche in Bezug auf eine erste Ebene geneigt sind, **dadurch gekennzeichnet, dass**:
- das Head-up-Dislay-System einen Eyetracker (310, 320) umfasst, welcher in der Lage ist, die Position der Augenpupille (Y) eines Beobachters zu erkennen;
- mindestens eines der ersten reflektierenden Plättchen (213) eine Behandlung mit programmierbarer Reflexionsfähigkeit umfasst, wobei die Reflexionsfähigkeit von der durch den Eyetracker (310, 320) erkannten Position und/oder Ausrichtung der Augenpupille dergestalt abhängt, dass ein Bild des Displays (110) in Richtung der Pupille und nur in ihre Richtung reflektiert wird;
- der optische Leiter (200) einen zweiten Bildleiter (220) umfasst, welcher eine Vielzahl von zweiten inneren halbreflektierenden Plättchen (223) umfasst, welche in Bezug auf eine zweite, zur ersten Ebene rechtwinklige Ebene geneigt sind, wobei der erste Bildleiter (210) die Pupille in eine erste Richtung weitet, wobei der zweite Bildleiter (220) die Pupille in die rechtwinklige Richtung weitet, wobei mindestens eines der zweiten Plättchen eine Behandlung mit programmierbarer Reflexionsfähigkeit umfasst, wobei die Reflexionsfähigkeit von der durch den Eyetracker erkannten Position und/oder Ausrichtung der Augenpupille dergestalt abhängt, dass das Bild des Displays in Richtung der Pupille und nur in ihre Richtung reflektiert wird.

2. Head-up-Dislay-System nach Anspruch 1, **dadurch gekennzeichnet, dass** die ersten halbreflektierenden Plättchen (213) eben und zueinander parallel sind und/oder die zweiten halbreflektierenden Plättchen (223) eben und zueinander parallel sind.

3. Head-up-Dislay-System nach Anspruch 2, **dadurch gekennzeichnet, dass** jeder optische Leiter (200) eine äußere Form eines Plättchens mit ebenen und parallelen Seiten (211, 212, 221, 222) aufweist.

4. Head-up-Dislay-System nach einem der vorhergehenden Ansprüche, **dadurch gekennzeichnet, dass**, in Ermangelung von durch den Bildgeber übertragenen Bildern, die Reflexionsfähigkeit der Plättchen, welche eine Behandlung mit programmierbarer Reflexionsfähigkeit umfassen, von der Helligkeit der äußeren Landschaft abhängt.

5. Head-up-Dislay-System nach einem der vorhergehenden Ansprüche, **dadurch gekennzeichnet, dass** das vom Display bereitgestellte Bild von den Positions- und/oder Ausrichtungsinformationen der Pupille abhängt, welche von dem Eyetracker bereitgestellt werden.

## Claims

1. Heads-up display system comprising at least one display (110) and an optical guide (200) comprising a first image guide (210) comprising a plurality of first internal semi-reflecting plates (213), inclined with respect to a first plane, **characterized in that**:
- the heads-up display system comprises an oculometer (310, 320) capable of detecting the position of the pupil (Y) of the eye of an observer;
- at least one of said first reflecting plates (213) comprising a processing with programmable reflectivity, said reflectivity depending on the position and/or the orientation of the ocular pupil detected by the oculometer (310, 320), in such a manner as to reflect the image of the display (110) towards said pupil and only towards the latter;
- the optical guide (200) comprises a second image guide (220) comprising a plurality of second internal semi-reflecting plates (223), inclined with respect to a second plane perpendicular to the first plane, the first image guide (210) widens the pupil in a first direction, the second image guide (220) widens the pupil in the perpendicular direction, at least one of said second plates comprising a processing with programmable reflectivity, said reflectivity depending on the position and/or the orientation of the ocular pupil detected by the oculometer in such a manner as to reflect the image of the display towards said pupil and only towards the latter.

2. Heads-up display system according to claim 1, **characterized in that**, the first semi-reflecting plates (213) are plane and parallel to one another and/or the second semi-reflecting plates (223) are plane and parallel to one another.

3. Heads-up display system according to claim 2, **characterized in that**, each optical guide (200) has the external shape of a plate (211, 212, 221, 222) with plane and parallel faces.

4. Heads-up display system according to anyone of the preceding claims, **characterized in that**, in the absence of images transmitted by the imaging system, the reflectivity of the plates comprising a processing with programmable reflectivity depends on the luminance of the external scene.

5. Heads-up display system according to one of the preceding claims, **characterized in that** the image supplied by the display depends on the information on position and/or on orientation of the pupil supplied by the oculometer.
